# EUROPEAN PATENT APPLICATION

(11) **EP 4 694 179 A1**
(43) Date of publication of application: **11.02.2026**
(21) Application number: 24780297.8
(22) Date of filing: 26.03.2024
(51) Int. Cl.: H04Q 9/00

(54) **METHOD, FACILITY MANAGEMENT DEVICE, AND PROGRAM**

(30) Priority: 31.03.2023 JP 2023059591
(71) Applicant: DAIKIN INDUSTRIES, LTD., Osaka-Shi, Osaka 530-0001 (JP)
(72) Inventor: KOBAYASHI, Hiroki, Osaka-Shi, Osaka 530-0001 (JP); MAEDA, Chikara, Osaka-Shi, Osaka 530-0001 (JP)
(74) Representative: Hoffmann Eitle
(86) International application number: PCT/JP2024/011926
(87) International publication number: WO 2024/204185

(57) **Abstract**

To associate model data points used at the user interface end and device data points used at the facility/equipment end with each other automatically, the present disclosure provides a method for use by a building management device for managing facilities and equipment installed on property, the method including associating model data points, at which data for use in an application for monitoring and controlling the facilities and equipment is stored, with device data points, at which data that is input from or output to the facilities and equipment is stored. A control unit associates the model data points and the device data points with each other based on respective pieces of identification information assigned to the model data points and the device data points.

## Description

### Technical Field

This disclosure relates to a method, a building management device, and a program.

### Background Art

Human-made structures such as buildings incorporate various facilities and pieces of equipment, including electrical equipment for air conditioning and lighting, equipment for disaster prevention, and so forth. A building management device generally manages all the facilities and equipment in a centralized manner. A building management device like this enables users to operate any facility or piece of equipment, regardless of the manufacturer or model, from a common user interface. In the building management device, data related to the control of facilities and equipment such as temperature and humidity is stored at device data points, while, on the user interface end, the same or substantially the same data is stored at model data points. Every facility or piece of equipment provides multiple device data points, and each device data point corresponds to a different model data point on the user interface end. In the past, the person responsible for the setup had to connect the device data points and the model data points with each other.

There is a technique for connecting modules in software using tags. For example, according to the technique disclosed in patent document 1, I/O tags T2, which are used in a controller, are associated with I/O tags T1, which are set in respective I/O ports of an I/O module.

### Citation List

### Patent Document

[Patent Document 1] Japanese Patent Application Publication No. 2016-081415

### Summary of Invention

### Technical Problem

However, existing techniques do not automatically build associations between model data points used on the user interface end and device data points used on the facility and equipment end, and so the workers have to perform this cumbersome task manually. To connect model data points and device data points with each other automatically, information that identifies each data point is needed. However, in the event there are many data points, for example, assigning identification ("ID") information to each data point is not typically done, and therefore automatically drawing associations between data points with matching ID information is not usually done either.

In view of the foregoing, the present disclosure aims to provide a technique for associating model data points used on the user interface end with device data points used on the facility and equipment end automatically.

### Solution to Problem

A first example of the present disclosure provides a method, for use by a building management device for managing facilities and equipment installed on property, that includes associating model data points, at which data for use in an application for monitoring and controlling the facilities and equipment is stored, with device data points, at which data that is input from or output to the facilities and equipment is stored.

A control unit associates the model data points and the device data points with each other based on respective pieces of identification information assigned to the model data points and the device data points.

According to the first example of the present disclosure, the amount of labor required to set up a building management device can be reduced.

Based on the method of the first example, in a second example of the present disclosure:
the model data points are generated based on a model template that is provided for each type among the facilities and equipment; and
the model data points for use in monitoring and controlling the facilities and equipment are defined, with respective pieces of identification information assigned to the model data points, in the model template.

Based on the method of the first or second example, in a third example of the present disclosure:
the building management device stores a link rule that defines respective pieces of identification information assigned to one of the model data points and one of the device data points that are to be associated with each other; and
the control unit identifies and associates the one of the model data points and the one of the device data points with each other based on the link rule.

Based on the methods of the first to third examples, in a fourth example of the present disclosure:
the device data points are generated based on a device template that is provided for each model among the facilities and equipment; and
in the device template, all the device data points that the facilities and equipment provide are defined, with respective pieces of identification information assigned to the device data points.

Based on the methods of the first to fourth examples, in a fifth example of the present disclosure:
when data stored at one of the device data points changes, the control unit changes corresponding data stored among the model data points; and
when data stored at one of the model data points changes, the control unit changes corresponding data stored among the device data points and sends a data change request to the facilities and equipment.

Based on the method of the first example, in a sixth example of the present disclosure:
the model data points are generated based on a model template that is provided for each type among the facilities and equipment;
in the model template, the model data points for use in monitoring and controlling the facilities and equipment are defined, with respective pieces of identification information assigned to the model data points;
the device data points are generated based on a device template that is provided for each model among the facilities and equipment;
in the device template, all the device data points that the facilities and equipment provide are defined, with respective pieces of identification information assigned to the device data points; and
the control unit associates the model data points in the model template with the device data points in the device template, based on the respective pieces of identification information assigned to the model data points and the device data points.

Based on the methods of the first to sixth examples, in a seventh example of the present disclosure:
converting data points, where data of the device data points is relayed to the model data points or data of the model data points is relayed to the device data points, are set in a data conversion template for converting a data format of the device data points to a data format of the model data points or for converting the data format of the model data points to the data format of the device data points; and
the control unit:
   associates the converting data points with corresponding device data points based on respective pieces of identification information assigned to the converting data points and the corresponding device data points; and
   associates the converting data points with corresponding model data points based on respective pieces of identification information assigned to the converting data points and the corresponding model data points.

Based on the method of the seventh example, in an eighth example of the present disclosure, the data conversion template:
converts a data format of data output from the device data points associated with the converting data points, to a first data format and a second data format, the model data points associated with the converting data points supporting the first data format and the second data format; or
converts the first data format and the second data format that the model data points associated with the converting data points support, to a data format of data input to the device data points associated with the converting data points.

Based on the method of the seventh example, in a ninth example of the present disclosure, the data conversion template:
converts a data format including a plurality of pairs of keys and values and output from the device data points associated with the converting data points, to a binary data format and a data format including a plurality of pairs of keys and values, both data formats being supported by the model data points associated with the converting data points; or
converts the binary data format and the data format including the plurality of pairs of keys and values, both data formats being supported by the model data points associated with the converting data points, to a data format including a plurality of pairs of keys and values and input to the device data points associated with the converting data points.

Based on the method of the seventh example, in a tenth example of the present disclosure, the data conversion template:
converts a numeric data format output from the device data points associated with the converting data points, to a binary data format and a data format including a plurality of pairs of keys and values, both data formats being supported by the model data points associated with the converting data points; or
converts the binary data format and the data format including the plurality of pairs of keys and values, both data formats being supported by the model data points associated with the converting data points, to a numeric data format input to the device data points associated with the converting data points.

An eleventh example of the present disclosure provides a building management device for managing facilities and equipment installed on property, the building management device including a control unit configured to associate model data points and device data points with each other based on respective pieces of identification information assigned to the model data points and the device data points, data for use in an application for monitoring and controlling the facilities and equipment being stored at the model data points, and data that is input from or output to the facilities equipment being stored at the device data points.

According to the eleventh example of the present disclosure, the labor required to set up the building management device can be reduced.

A twelfth example of the present disclosure provides a program for causing a building management device for managing facilities and equipment installed on property to function as a control unit configured to associate model data points and device data points with each other based on respective pieces of identification information assigned to the model data points and the device data points, data for use in an application for monitoring and controlling the facilities and equipment being stored at the model data points, and data that is input from or output to the facilities equipment being stored at the device data points.

According to the twelfth example of the present disclosure, the labor required to set up the building management device can be reduced.

### Advantageous Effects of the Invention

According to the technique of the present disclosure, the labor required to set up a building management device can be reduced.

### Brief Description of Drawings

[FIG. 1] FIG. 1 is a diagram showing an example system architecture of a building management system, in which a building management device controls various facilities and pieces of equipment via networks;
[FIG. 2] FIG. 2 is a diagram for explaining an example structure of software for controlling the building management system;
[FIG. 3] FIG. 3 is a diagram for schematically explaining how a person who performs the setup connects device data points and model data points with each other using software tools;
[FIG. 4] FIG. 4 is a diagram schematically showing the correspondence between software that operates on an associated information creating device, and facilities and equipment;
[FIG. 5] FIG. 5 is a diagram for explaining an example system architecture of software tools that operate on the associated information creating device;
[FIG. 6] FIG. 6 is a diagram for explaining an example of connecting device data points and model data points with each other;
[FIG. 7] FIG. 7 is a diagram showing an example hardware structure of the associated information creating device;
[FIG. 8] FIG. 8 is a functional block diagram showing an example of an associated information creating device on which an auto link module operates;
[FIG. 9] FIG. 9 is a diagram showing examples of device template information stored in a device template information storage unit;
[FIG. 10A] FIG. 10A is a diagram showing examples of model template information stored in a model template information storage unit;
[FIG. 10B] FIG. 10B is a diagram showing examples of link rule information associated with a model template 14;
[FIG. 11A] FIG. 11A is a diagram showing examples of data format conversion template information stored in a data conversion template information storage unit;
[FIG. 11B] FIG. 11B is a diagram showing examples of link rule information associated with data conversion templates;
[FIG. 12] FIG. 12 is a diagram showing an example of a link rule;
[FIG. 13] FIG. 13 is a flowchart showing examples of steps that the person responsible for the setup performs on the associated information creating device;
[FIG. 14] FIG. 14 is a flowchart for explaining an example of a process that the auto link module performs to connect model data points in a model template with device data points in a device template;
[FIG. 15] FIG. 15 is a diagram for schematically explaining how the auto link module creates associated information;
[FIG. 16A] FIG. 16A is a diagram for explaining a data format;
[FIG. 16B] FIG. 16B is a diagram for explaining another data format;
[FIG. 16C] FIG. 16C is a diagram for explaining yet another data format;
[FIG. 17] FIG. 17 is a diagram showing examples of data format conversion, including multi-to-Boolean conversion and multi-to-multi conversion;
[FIG. 18] FIG. 18 is a diagram showing examples of data format conversion executed when, seen from the model template of FIG. 17, the same data format is not found in a device template;
[FIG. 19] FIG. 19 is a diagram showing examples of data format conversion, including numeric-to-Boolean conversion and numeric-to-multi conversion; and
[FIG. 20] FIG. 20 is a diagram showing examples of data format conversion executed when, seen from the model template of FIG. 19, the method of indicating the number of fan rotations per unit time and commanding the fan's ON/OFF are different between a model template and a device template.

### Description of Embodiments

A building management system and how this system builds associations between data points will be described below as an example of implementing the present disclosure.

### <Building Management System>

Building management systems are installed on many properties including office buildings, commercial facilities, schools, hospitals, and so on. These systems are often referred to as "building automation system (or "BAS")," "building energy management system (or "BEMS")," "building management system (or "BMS")," "building automation and control system (or "BACS")," and so on. There is not a strict definition for these terms, but each system will be explained briefly.

"BAS" (building automation system) is a system that allows automatic control of facilities installed on property. In particular, BAS allows for centralized controlling and monitoring of all facilities and equipment such as HVAC and lighting systems, security systems, and power meters, all of which, previously, the property owner/manager had to control manually via networks.

BEMS (building energy management system) is a system that allows for energy management on property. Although BAS can be used for energy management, BEMS places a greater focus on making energy consumption visible. With BEMS, energy consumption is made visible on a real time basis, so that historical data (from the previous day, month, year, etc.) can be displayed in a comparative manner, making it easy to determine whether the current rate of energy consumption is appropriate.

BMS (building management system) is a system for monitoring and controlling various facilities and pieces of equipment installed on property, such as power, HVAC, lighting, disaster prevention, and security systems. In office buildings and other types of properties, these facilities and equipment are in operation. To maintain these facilities and equipment in safe operating conditions and ensure they function properly, it is necessary, for example, to monitor their status and immediately identify any anomalies that may occur. Furthermore, if these facilities and equipment can be operated and reconfigured from a remote location, the property manager/owner no longer has to directly handle them manually, so that his/her workload can be reduced significantly.

BACS (building automation and control system) refers to a system that, although not in a strict sense, combines BAS, BMS, and BEMS, and is registered under ISO 16484-5.

BAS, BEMS, BMS, BACS, or similar facilities and systems for property management will be hereinafter collectively referred to and described as "building management system," without drawing distinctions between them.

### <Example of System Architecture>

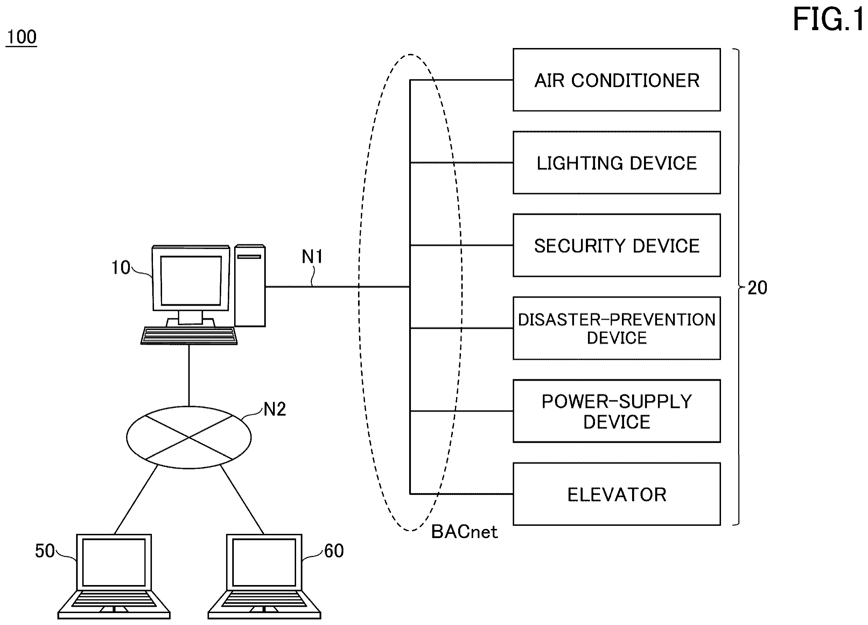

FIG. 1 is a diagram showing an example system architecture of a building management system 100, in which a building management device 10 controls various facilities and pieces of equipment 20 over networks. For example, in FIG. 1, the building management device 10 and the facilities and equipment 20 are communicably connected via a network N1. This network N1 may be, for example, a "BACnet" network. "BACnet" refers to a network that allows the building management system 100 to communicate with various facilities and pieces of equipment 20 based on the BACnet protocol. The network N1 may use dedicated cables or use Ethernet (registered trademark) cables that are the same as or substantially the same as those used in standard local area networks (LANs). The building management system 100 does not necessarily have to use the BACnet protocol for network communication; the BACnet protocol is simply one option. Other communication protocols such as the Modbus protocol, for example, may be used as well.

Examples of the facilities and equipment 20 illustrated include an air conditioner, a lighting device, a security device, a disaster prevention device, a power supply device, and an elevator, but these are simply examples. Note that a gateway device called a "BACnet gateway" may be placed between the facilities and equipment 20 and the BACnet network. The BACnet gateway converts communication data that is compatible with the BACnet protocol, into communication data of the communication protocol that the facilities and equipment 20 support, and converts communication data of the communication protocol that the facilities and equipment 20 support, into communication data that is compatible with the BACnet protocol. Different companies/ manufacturers may set forth different communication protocols; accordingly, the facilities and equipment 20, if made by different companies/manufacturers, may support varying communication protocols. That is, the facilities and equipment 20 may be made by different companies or brands.

The building management device 10 has a web server's functions. For example, the building management device 10 creates web pages (using HTML, etc.) for managing the facilities and equipment 20, and sends them to the terminal 50 via a network N2. The network N2 may be, for example, the Internet. Users can monitor the facilities and equipment 20 by connecting the terminal 50 to the building management device 10 from any location. In the event no terminal 50 is available, users still can monitor the facilities and equipment 20 by directly operating the consoles (display, keyboard, etc.) of the building management device 10.

An associated information creating device 60 is also communicably connected to the network N2. The associated information creating device 60 has only to be able to communicate with the building management device 10 via the network N2 and need not be connected to the network N2 at all times. When connecting device data points 16 and model data points 15 with each other as will be described later in this disclosure, the building management device 10 can perform this task alone.

In the associated information creating device 60, an operating system such as Windows (registered trademark) is pre-installed. The associated information creating device 60 has software tools, pre-installed therein to perform the task of connecting (or associating) model data points with device data points (these data points will be described in detail later). The term "connect" will be used throughout this specification. Furthermore, the associated information creating device 60 may be any device insofar as software tools can operate thereon, and may be, for example, a personal computer (PC), a tablet terminal, a smartphone, and the like.

In the context of BACnet, the functions of the facilities and equipment 20 are explained based on the concept of "objects." An "object" represents a body of various information; in the context of BACnet, information that relates to an object is referred to as "property." For example, in the event an air conditioner is an "object," conditions that the air conditioner can control (e.g., temperature, airflow, etc.) are its "properties." Furthermore, in the context of BACnet, the act of reading from or writing to an object and its properties are referred to as "service." In the following description of the present disclosure, the terms "object" and "property" will be used interchangeably and referred to simply as "device data points" for ease of explanation.

### <Software Structure in Information Processing System>

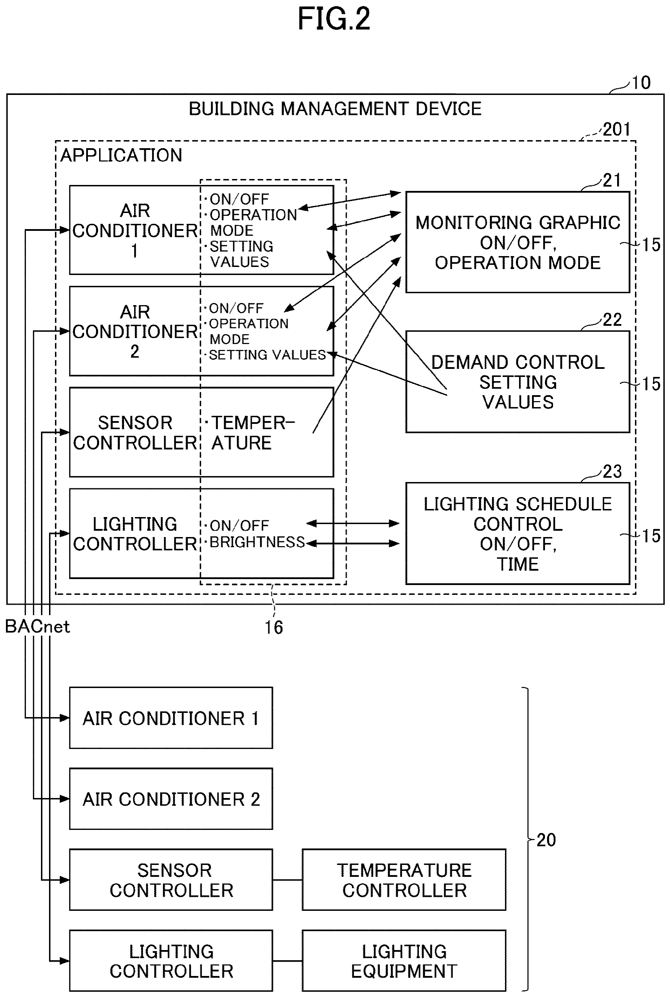

FIG. 2 illustrates an example structure of software 201 for controlling the building management system 100. This software 201 operates on the building management device 10. As mentioned earlier, the building management device 10 is communicably connected with actual facilities and equipment 20. The software 201 is an application for controlling and monitoring these facilities and equipment 20. To control the facilities and equipment 20 on the building management device 10, the software 201 has device data points 16 that serve as an interface with the facilities and equipment 20. The device data points 16 hold data that is input to or output from the facilities and equipment 20. The device data points 16 are provided based on the type and format of data (such as analog or digital signals) input to or output from the facilities and equipment 20, and often vary per facility or piece of equipment 20. Users can control the facilities and equipment 20 by operating corresponding device data points 16 on the building management device 10.

Other user interfaces, system control logic, and so forth may be created by engineers and incorporated in the software 201. For example, FIG. 2 shows a graphic representation 21, which serves as a user interface for air conditioners 1 and 2. In addition, FIG. 2 shows examples of system control logic, namely a demand control 22 and a lighting schedule control 23. The demand control 22 controls the facilities and equipment 20 based on desired setting values. The lighting schedule control 23 schedules lighting control, such as when lights are turned on/off, the brightness of lights, and so forth.

User interfaces and system control logic should ideally enable users to operate varying facilities and equipment 20 with ease; accordingly, for example, a user interface and system control logic that varying facilities and equipment 20 can share may be incorporated in the software 201. It is also possible to provide separate user interfaces and system control logic per facility or piece of equipment 20.

Up until present day, before starting the management system 100, the person who is responsible for its setup had to perform the task of connecting model data points 15, such as ones that serve as a user interface, system control logic, etc., with device data points 16, to allow users to control the facilities and equipment 20 by operating the device data points 16 using the user interface. The model data points 15 hold data for use in an application (for example, the software 201) for monitoring and controlling the facilities and equipment 20.

In FIG. 2, the model data point 15 associated with the graphic representation 21 of the air conditioners 1 and 2 is connected with, for example, device data points 16 that indicate the ON/OFF status and operation mode of the air conditioners 1 and 2. The model data point 15 associated with the demand control 22 is connected with, for example, device data points 16 that indicate setting values of the air conditioners 1 and 2. The model data point 15 associated with the lighting schedule control 23 is connected with, for example, device data points 16 that indicate a lighting controller's ON/OFF status and brightness level. As described above, the person who sets up the management system 100 has to connect these user-interface and/or control-model data points 15 with device data points 16 used on the facility and equipment 20 end.

Every property where the building management system 100 is installed has different facilities and equipment, and so the person responsible for the setup of the building management system 100 has to start from scratch. In one method of building the building management system 100, the person performing the setup may manually connect model data points 15 with device data points 16 by using special software tools.

In FIG. 2, a number of arrows represent, in a simplified manner, connections built thus. For example, the double-headed arrows indicate that data can be communicated bidirectionally between the device data points 16 and the model data points 15, whereas the single-headed arrows indicate that data can only be communicated unidirectionally between the device data points 16 and the model data points 15.

When a user inputs data to a user interface on the building management device 10, the building management device 10 sends this data to the device data point 16 connected with the user interface's model data point 15. The device data points 16 send this data to the facilities and equipment 20 via a BACnet network. The user can thus control actual facilities and equipment 20 from the software 201. Conversely, data arriving at a device data point 16 from the facilities and equipment 20 via the BACnet network is sent to the corresponding model data point 15, allowing the user to check the status of the facilities and equipment 20.

### <Comparative Example>

To draw a comparison with the technique of the present disclosure, how the person performing the setup may connect device data points 16 and model data points 15 manually will be described. Software tools for the setup are available and allow the person performing the setup to perform the task by operating the associated information creating device 60.

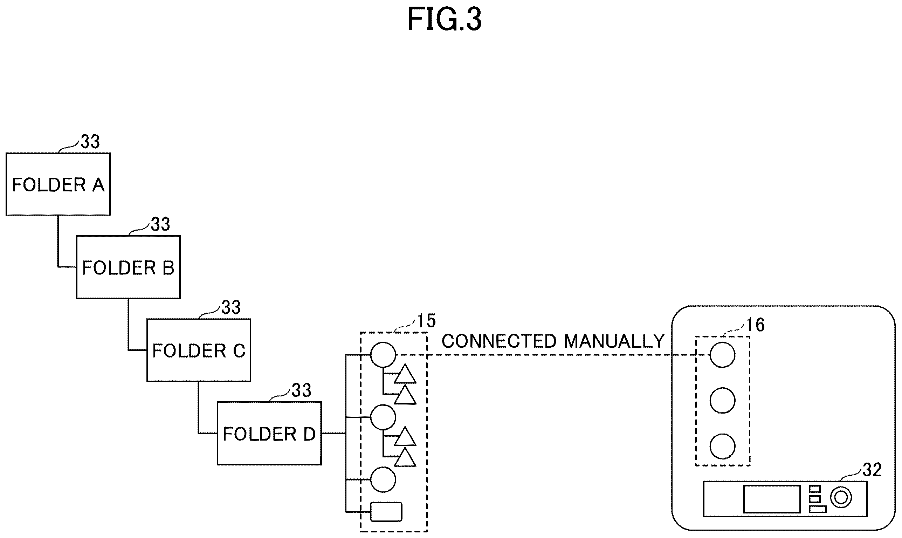

FIG. 3 is a diagram for schematically explaining how the person performing the setup connects device data points 16 and model data points 15 using software tools.

The person performing the setup manually:
A. connects the facilities and equipment 20 with device data points 16; and
B. connects the device data points 16 with model data points 15.
The present disclosure can make the task "B" automatic.

### <Example Architecture of Software and Software Tools>

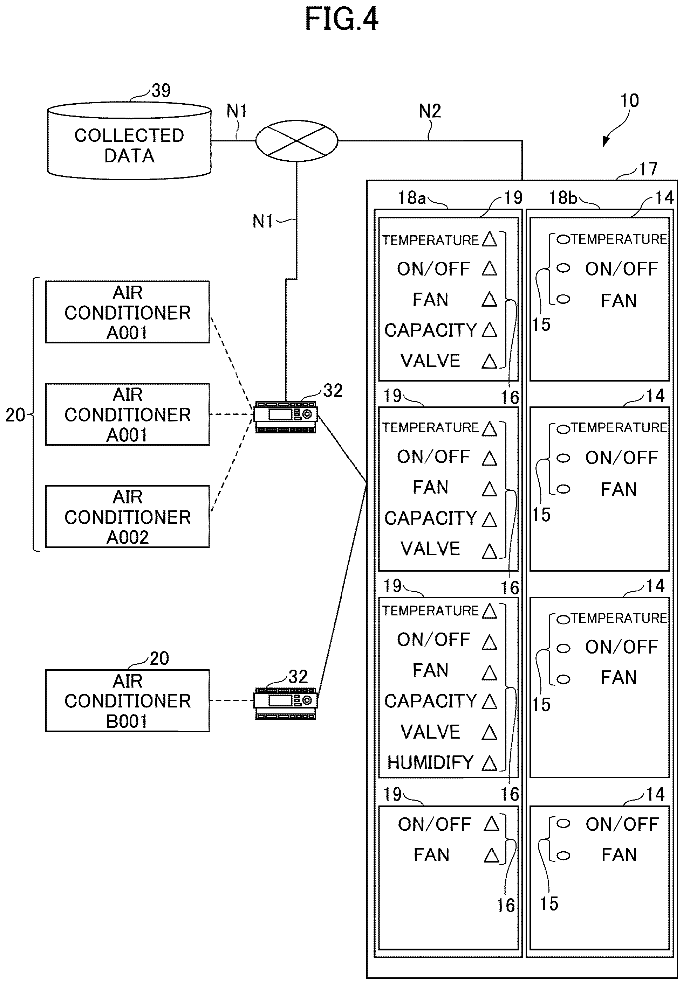

FIG. 4 is a diagram for schematically explaining the correspondence between software that operates on the associated information creating device 60, and the facilities and equipment 20. As described above, the facilities and equipment 20 and the building management device 10 are connected with each other via the network N1. A collected data storage unit 39 is also connected to the network N1. The collected data storage unit 39 stores various information acquired from the facilities and equipment 20.

In FIG. 4, a single controller 32 is connected with one facility or piece of equipment 20, or connected with multiple facilities and pieces of equipment 20. The controller 32 has: a function to receive commands for operating the facilities and equipment 20 as hardware; and a function to transmit control signals to the facilities and equipment 20. That is, the controllers 32 and the facilities and equipment 20 may be connected such that two or more facilities and pieces of equipment 20 share one controller 32.

Note that, although there is no substantial difference between "software" and "software tool," for ease of explanation, that which is used until the setup is done may be referred to as "software tool," and that which is used after the setup is done may be referred to as "software."

The software tools include a station template 17, model templates 14, and device templates 19. The station template 17 is a standardized template for station files. A station file is an abstract representation of the building management system 100.

A model template 14 provides a work area in which model data points 15 may be positioned. Model templates 14 are provided per type among the facilities and equipment 20, and model data points 15 are generated based on each model template 14. Each model template 14 defines model data points 15 for use for monitoring and controlling the corresponding type of facilities and equipment 20, and each model data point 15 is assigned unique ID information ("tag," which will be described later). Each model template 14 includes model data points 15 that correspond, for example, to the user interface and system control logic shown in FIG. 2.

A device template 19 provides a work area in which device data points 16 may be positioned. Device templates 19 are provided per model among the facilities and equipment 20, and device data points 16 are generated based on each device template 19. Each device template 19 defines all the device data points 16 that the corresponding model of facilities and equipment 20 may have, and each device data point 16 is assigned unique ID information. Device data points 16 such as those shown in FIG. 2 are set in the device templates 19.

Model templates 14 are provided per type among the facilities and equipment 20, and device templates 19 are provided per model among the facilities and equipment 20. Assuming a given facility or piece of equipment 20, its "type" is the series name, brand name, etc. given to this particular facility or equipment 20. A given facility or piece of equipment 20 may be a particular "model" if a number of facilities or pieces of equipment share the same series name, brand name, etc. In the example of FIG. 4, "AIR CONDITIONER A001," "AIR CONDITIONER A002," and "AIR CONDITIONER B001" are "models," whereas "AIR CONDITIONER A" and "AIR CONDITIONER B" are "types."

The person performing the setup adds device templates 19 and model templates 14 to the station template 17, thereby imparting functions to the building management system 100. In other words, the station template 17 serves as a core component of the building management system 100 that holds the device templates 19 and model templates 14 together.

The station template 17 has two layers: a model layer 18b and a driver layer 18a. The driver layer 18a corresponds to the facilities and equipment 20, and the model layer 18b corresponds to the user interface. In the driver layer 18a, which corresponds to the facilities and equipment 20, device templates 19 are provided per model among the facilities and equipment 20. In each device template 19, device data points 16, at which data input and output with respect to the corresponding facility or equipment 20 is stored, are set. In the model layer 18b, which corresponds to the user interface, model templates 14 are positioned per type among the facilities and equipment 20. In each model template 14, model data points 15, at which data that relates to the corresponding facility or equipment 20 is stored, are set. To ensure that the number of models is greater than or equal to the number of types, the number of device data points 16 in a device template 19 is greater than or equal to the number of model data points 15 in a model template 14. Grouping the model data points 15 in model templates 14 by type (that is, per same product category) makes it not necessary to create model templates 14 in numerous patterns, thus saving time and efforts. Furthermore, since model data points 15 and device data points 16 are connected together based on link rules set forth in the model template 14, the process of building these connections may be performed less frequently.

Each device data point 16 and each model data point 15 hold data. Data that is stored at a given device data point 16 can be accessed through a corresponding controller 32, and data that is stored at a given model data point 15 can be accessed through a corresponding user interface. For example, when data is sent from a facility or a piece of equipment 20 to a device data point 16, the model data point 15 connected therewith receives the data. This data may be subjected to various processes, including displaying, logic processing, etc., depending on what the model data point 15 indicates. When a device data point 16 receives, for example, data that is sent from the model data point 15 connected therewith, the device data point 16 sends the data to the corresponding facility or equipment 20. In the building management device 10, the associated information creating device 60 of the present disclosure automatically connects device data points 16 in a device template 19 with model data points 15 in a model template 14 such that access to data is allowed between the model data points 15 and the device data points 16.

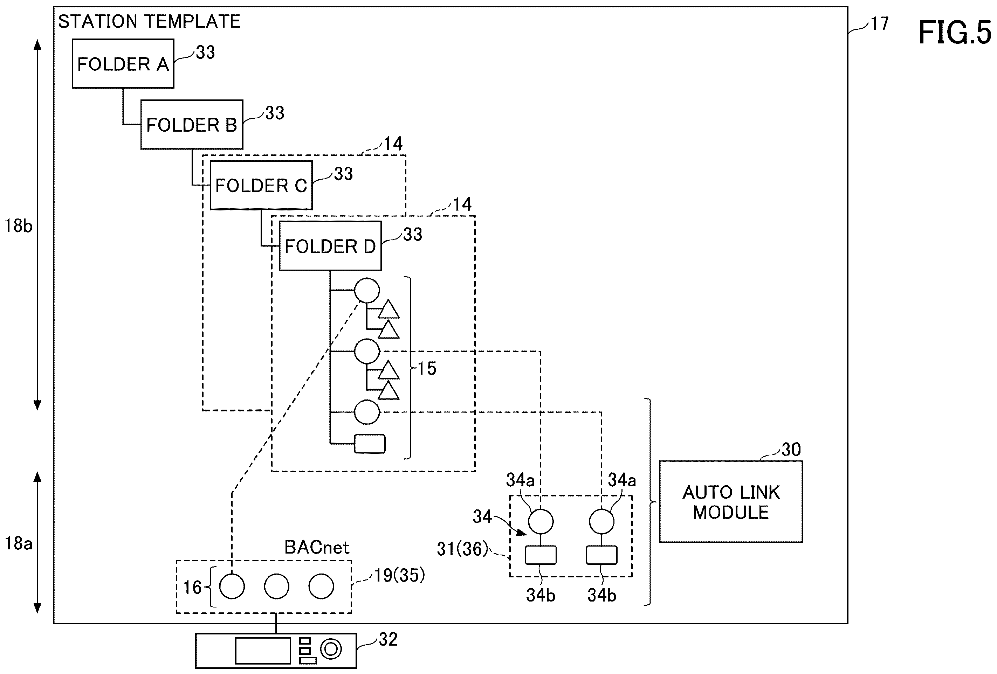

Next, how device data points 16 and model templates 14 are automatically connected with each other using software tools will be described with reference to FIG. 5. FIG. 5 is a diagram for explaining an example architecture of software tools that operate on the associated information creating device 60. According to the software tools of FIG. 5, model templates 14 and device templates 19 are provided in a station template 17. These templates can be configured by the person performing the setup. Forming the station template 17, the layer in which model templates 14 are placed is referred to as the "model layer 18b," as mentioned earlier, and the layer in which device templates 19 and data conversion templates 31 are placed is referred to as the "driver layer 18a."

In the model templates 14, multiple folders 33 form a multi-layer structure. Each folder 33 contains one or more model data points 15. Model data points 15 with similar functions are grouped together and stored in the same folder 33. The circles and squares positioned below the folders 33 (folder D in FIG. 5) represent model data points 15. The person performing the setup organizes model data points 15 in folders 33 in this way to: facilitate easier management when there are a large number of data points 15 and folders 33; and limit the model data points 15 to be connected with device data points 16 in the device templates 19 to those placed in the folders 33 even when there are multiple model data points 15 with the same ID information ("tag," which will be described later) in the entire system.

The device template 19 also has one or more folders 35. Although FIG. 5 shows only one device template 19 with only one folder 35, a device template 19 usually has multiple folders 35. Each folder 35 contains one or more device data points 16. Device data points 16 with similar functions are grouped together and stored in the same folder 35. The circles shown inside the folder 35 represent device data points 16. The person performing the setup stores device data points 16 in the folders 35 in this way in order, for example, to: facilitate easier management when there are a large number of data points 16 and folders 35; and limit the device data points 16 to be connected with model data points 15 in the model templates 14 to those placed in the folder 35 when the same ID information is assigned to multiple model data points 16 in the entire system.

Furthermore, in some cases, a data conversion template 31 for changing a data format that device data points 16 support in a device template 19 to a data format that is supported in a model template 14 (or the other way around) may be used. The data conversion template 31 serves as a template for a tool for data format conversion between device data points 16 and model data points 15.

The data conversion template 31 also has one or more folders 36. Although FIG. 5 shows a data conversion template 31 with one folder 36, this is for ease of illustration, and, usually, a data conversion template 31 contains multiple folders 36. Each folder 36 contains one or more data points 34 that are subject to or targeted for data format conversion (hereinafter simply "converting data points 34"). The data conversion template 31 includes converting data points 34a that correspond to the model templates 14, and converting data points 34b that correspond to the device template 19.

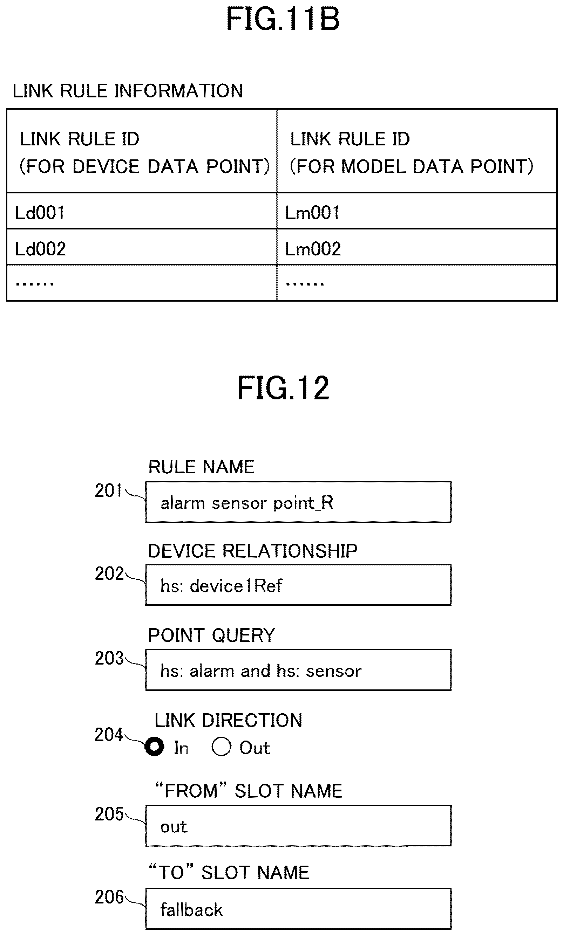

According to this disclosure, the associated information creating device 60 automatically performs the task of building connections between data points, previously described as "B." The function of the software tool to perform the task of automatically building connections is implemented by an "auto link module 30." The auto link module 30 operates in the driver layer 18a, but may also operate in the model layer 18b, or in both the driver layer 18a and the model layer 18b. The auto link module 30 connects device data points 16 and model data points 15 with each other based on link rules. The link rules will be described later in detail using FIG. 12.

### <Example of Connecting Device Data Points and Model Data Points>

Based on the architecture described thus far, an overview of the automated process of building connections according to the present disclosure will be described below. First, the person performing the setup assigns a "tag" (ID information) to each device data point 16 and each model data point 15. The associated information creating device 60 determines, based on these tags, with which device data point 16 in a device template 19 each model data point 15 in a model template 14 should be connected, and automatically connects these data points. Furthermore, in the event a model template 14 and a device template 19 support different data formats, the associated information creating device 60 connects, for example, device data points 16 in the device template 19 with converting data points 34b in the data conversion template 31, and automatically connects converting data points 34a in the data conversion template 31 with model data points 15 in the model template 14.

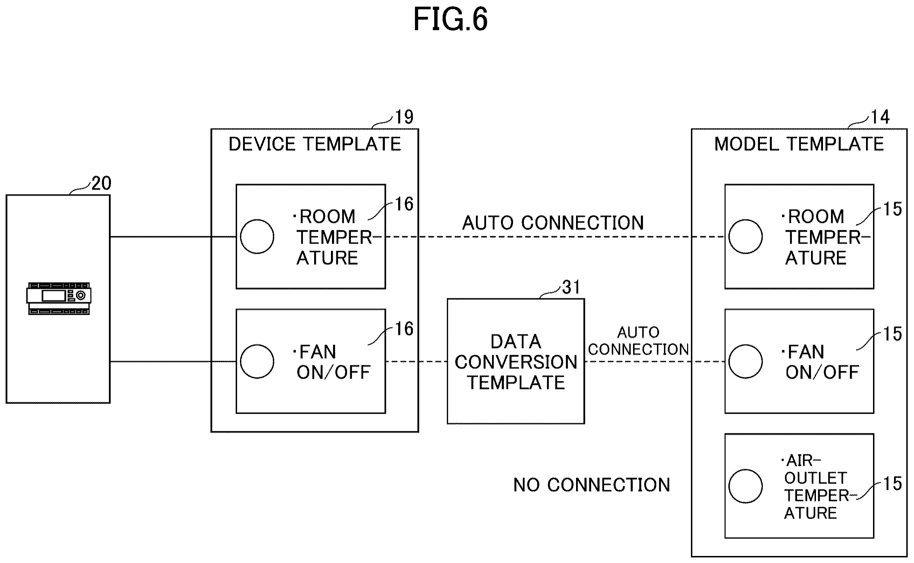

FIG. 6 illustrates an example in which device data points 16 and model data points 15 are connected with each other. Referring to FIG. 6, multiple device data points 16 are present in a device template 19, and multiple model data points 15 are present in a model template 14. Each device data point 16 and each model data point 15 are associated with a single piece of data. While the building management system 100 handles various types of data, "data" in this context refers to, for example, room temperature, a fan's ON/OFF status, air outlet temperature, and so forth.

The person performing the setup assigns a tag to each device data point 16 and each model data point 15 to indicate each point's characteristic. The tags serve as ID information that distinguishes each device data point 16 and each model data point 15. It is also possible to use tags that the person performing the setup can recognize with greater ease. Assuming that a given model data point 15 in the model template 14 has a certain tag, the associated information creating device 60, when performing the automatic connection process, scans the device template 19 to look for a device data point 16 having the same tag as that of the model data point 15, and, upon finding one, connects these data points.

In FIG. 6, a data conversion template 31 is provided for one model data point 15. The person performing the setup knows what data format the device data points 16 in the device template 19 support, as well as what data format the model data points 15 in the model template 14 support. If these data formats are different, the person performing the setup provides a data conversion template 31 between the device template 19 and the model template 14. To perform the automated connection process, the person performing the setup, for example, identifies a device template 19 and a model template 14 that need a data conversion template 31 by using software tools, and then carries out the connection process.

### <Example of Hardware Structure>

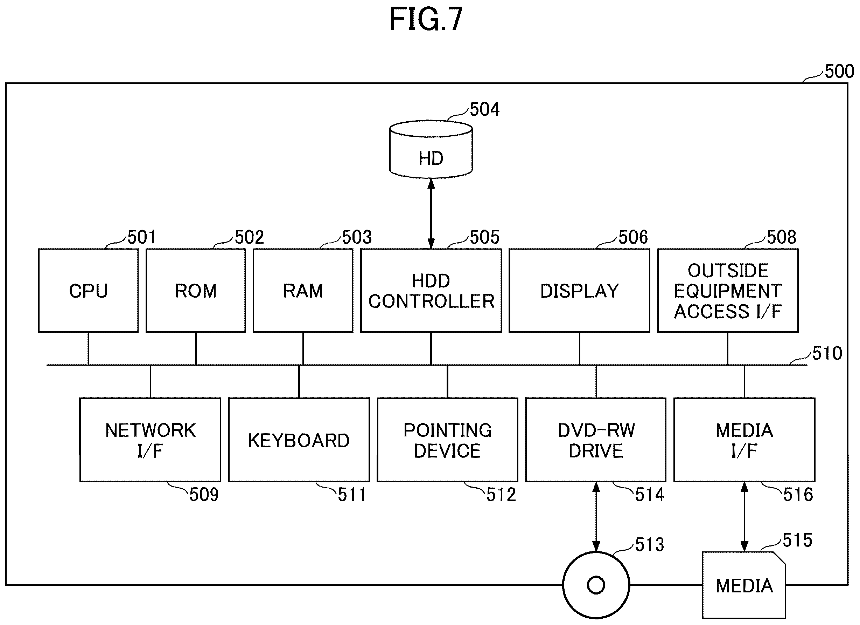

FIG. 7 is a diagram showing an example hardware structure of the building management device 10 and the associated information creating device 60. As shown in FIG. 7, the building management device 10 and the associated information creating device 60 are implemented using a computer 500. The computer 500 at least includes a CPU 501, a ROM 502, a RAM 503, a hard disk drive (HDD) 504, an HDD controller 505, a display 506, an outside equipment access I/F 508, a network I/F 509, a bus line 510, a keyboard 511, a pointing device 512, a digital versatile disk rewritable (DVD-RW) drive 514, and a media I/F 516.

Among these components, the CPU 501 controls the overall operation of the computer 500. The ROM 502 stores programs that are needed to operate the CPU 501, including an initial program loader (IPL) program. The RAM 503 serves as a work area for the CPU 501. The HDD 504 stores various data, including programs. Under the control of the CPU 501, the HDD controller 505 controls the reading and writing of data to and from the HDD 504. The display 506 displays various information, such as a cursor, menus, windows, text, and images. The outside equipment access I/F 508 is an interface for building connections with various pieces of outside equipment/devices. Examples of outside equipment/devices include universal serial bus (USB) memory devices, printers, and so forth. The network interface 509 is an interface for communicating data using the networks N1 and N2. The bus line 510 includes an address bus, a data bus, etc., and connects the CPU 501 and other components shown in FIG. 7 electrically.

Furthermore, the keyboard 511 is a type of input device equipped with multiple keys for entering, for example, characters, numbers, various commands, etc. The pointing device 512 is a type of input device used to select and execute various commands, choose objects to be processed, move the cursor, and so forth. The DVD-RW drive 514 controls the reading and writing of various data to and from the DVD-RW 513, which is an example of a removable storage medium. Note that the DVD-RW may also be a DVD-R or the like. The media interface 516 controls the reading and writing (storage) of data to and from the storage medium 515, such as flash memory.

### <Functions>

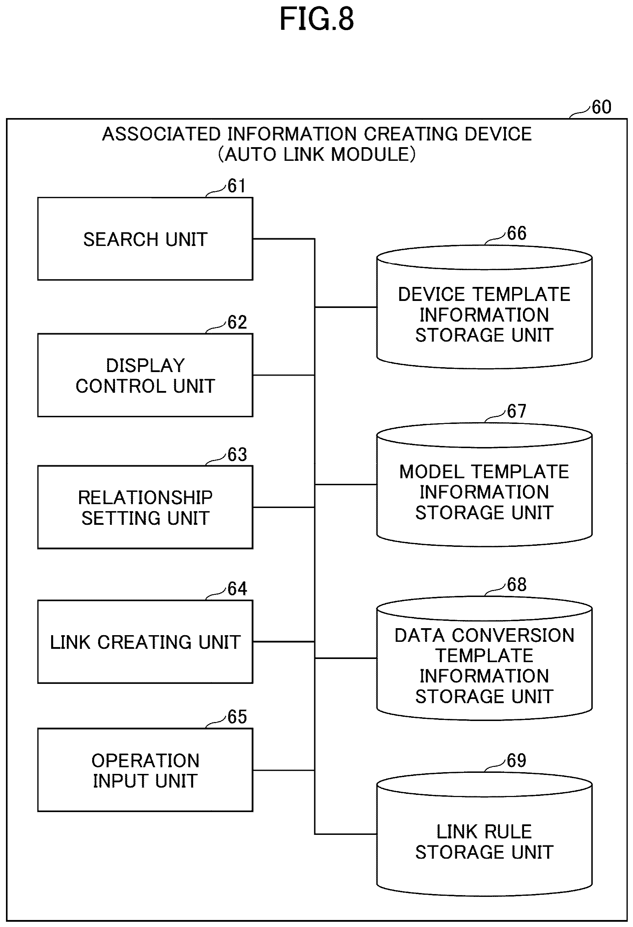

FIG. 8 is a functional block diagram of the associated information creating device 60, on which the auto link module 30 operates. This associated information creating device 60 may be any computer, such as a PC. The associated information creating device 60 at least includes a search unit 61, a display control unit 62, a relationship setting unit 63, a link creating unit 64, and an operation input unit 65. These functional units of the associated information creating device 60 are thus functions or means implemented by the CPU 501. The CPU 501, as shown in FIG. 5, executes the commands contained in one or more programs installed in the associated information creating device 60. This program may be used as software tools.

The associated information creating device 60 further includes a device template information storage unit 66, a model template information storage unit 67, a data conversion template information storage unit 68, and a link rule storage unit 69. These storage units are built in components shown in FIG. 5 such as the HDD 504, the RAM 503, etc.

The search unit 61 performs two types of searches. First, when a tag name in the model template 14 is specified, the search unit 61 searches for the same tag in the folders in the corresponding device template 19. Relationships are built between the folders of the model template 14 and the device template 19. Secondly, the search unit 61 searches for device data points 16 that satisfy the link rules specified by model data points 15 within the relationships built.

The display control unit 62 displays various screens to allow the person performing the setup to operate the software tools (including the station template 17, model template 14, device template 19, data conversion template 31, etc.).

In the event the search unit 61 finds a folder 33 in the model template 14 and a folder 35 in the device template 19 that match the search, the relationship setting unit 63 then relate these folders 33 and 35 to each other. Building "relationships" between folders thus can narrow the range of device data points 16 subject to searching. Furthermore, the relationship setting unit 63 not only builds relationships between the folders 33 in the model template 14 and the folders 36 in the data conversion template 31, but also builds relationships between the folders 36 in the data conversion template 31 and the folders 35 in the device template 19.

When the search unit 61 finds a model data point 15 in the model template 14 and a device data point 16 in the device template 19 match the search, the link creating unit 64 then creates a link between them. This linking corresponds to connecting (associating) device data points 16 and model data points 15 according to the present disclosure. Furthermore, in the event the search unit 61 finds a converting data point 34 in the data conversion template 31 and a device data point 16 in the device template 19 that match the search, the link creating unit 64 creates a link between them. Likewise, if the search unit 61 finds a converting data point 34 in the data conversion template 31 and a model data point 15 in the model template 14 that match the search, the link creating unit 64 creates a link between them.

The operation input unit 65 receives as inputs various operations that the person performing the setup performs on software tools operating on the associated information creating device 60.

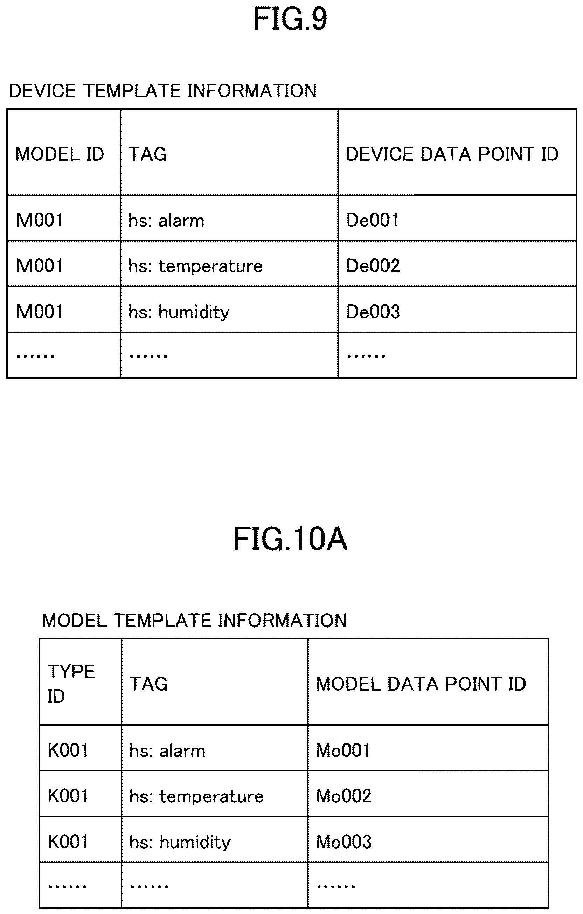

FIG. 9 is a diagram showing examples of device template information stored in the device template information storage unit 66. The device template information shown in FIG. 9 corresponds to some of the device data points 16 contained in the device template 19. The device template information includes entries such as model IDs, tags, and device data point IDs.

For each model ID, ID information that identifies the model of a facility or a piece of equipment 20 that is associated with the device template 19 is stored.

For each tag, information such as the name whereby the person performing the setup can identify a specific device data point 16 is stored. The tag entries store tags that are subject to searching. The tags assigned to device data points 16 are searched for when building connections with model data points 15 or converting data points 34.

For each device data point ID, ID information of a specific device data point 16 set in the software is stored.

FIG. 10A shows examples of model template information stored in the model template information storage unit 67. The model template information in FIG. 10A corresponds to some of the model data points 15 contained in the model template 14. The model template information has entries such as type IDs, tags, and model data point IDs.

For each type ID, ID information that identifies the type of a facility or a piece of equipment 20 that is associated with the model template 14 is stored.

For each tag, information such as the name whereby the person performing the setup can identify a specific model data point 15 is stored. The tags assigned to model data points 15 are searched for when building connections with device data points 16 or converting data points 34.

For each link rule ID, ID information of the link rule set at the corresponding model data point 15 is stored. The link rules are provided per model template 14.

For each model data point ID, ID information of a specific model data point 15 set in the software is stored.

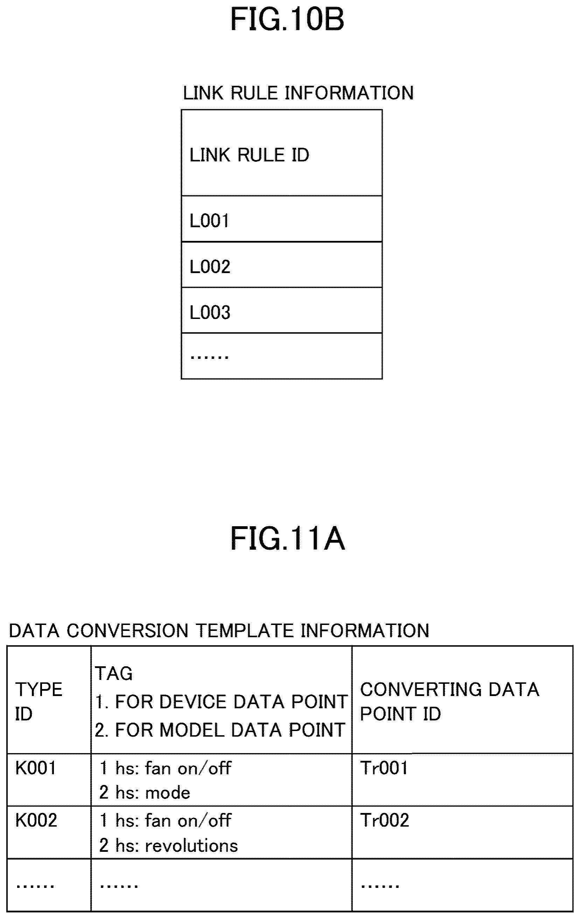

FIG. 10B shows link rule information associated with a given model template 14. One or more link rules are provided per model template 14.

FIG. 11A is a diagram showing examples of data format conversion template information stored in the data conversion template information storage unit 68. The data conversion template information of FIG. 11A corresponds to some of the converting data points 34 in the data conversion template 31. The data conversion template information includes entries such as type IDs, tags, and converting data point IDs. The type IDs may be the same or substantially the same as those of the model template information.

For each tag, information such as the name whereby the person performing the setup can identify a specific converting data point 34 is stored. There are tags for device data points and tags for model data points. These tags can be the same. The tags for converting data points 34 are searched for when building connections with device data points 16 or model data points 15.

For each converting data point ID, ID information of a specific data point 34 set in the software is stored. Different IDs may be assigned between device data points 16 and model data points 15.

FIG. 11B shows link rule information associated with a given data conversion template 31. One or more link rules are provided per data conversion template 31.

For each link rule ID for device data points, ID information of a link rule for connecting a device data point 16 in the device template 19 and a converting data point 34 in the data conversion template 31 is stored.

For each of link rule ID for model data points, ID information of a link rule for connecting a model data point 15 in the model template 14 and a converting data point 34 in the data conversion template 31 is stored.

Note that the same link rules may be used for both device data points 16 and model data points 15.

FIG. 12 is a diagram showing an example of a link rule. A "link rule" refers to a set of rules for, for example, connecting a model data point 15 and a device data point 16. A link rule also refers to a set of rules for connecting a converting data point 34 and a device data point 16 and for connecting a converting data point 34 and a model data point 15.

Link rules are set forth only in model templates 14 and data conversion templates 31 (and not applied to device data points 16). The person performing the setup sets the link rules when adding model templates 14 and data conversion templates 31 to a station template 17.

A link rule includes, for example, the following components:
"Rule Name 201," which is the name of the link rule, and which can be set on a random basis by the person doing the setup.
"Device Relationship 202," which is the relationship that is needed when creating a link. A "relationship" used herein is a location where a link may be created, regardless of whether or not actual exchange of data takes place. A good example of a relationship is one between folders, which has been described above.
"Point Query 203," which shows a query (search criterion) for searching for a tag in the device template 19. In the example of FIG. 12, "Point Query 203" shows "hs: alarm and hs: sensor." This means that device data points 16 that match the names (tags) "hs: alarm" and "hs: sensor" in the device template 19, are to be connected with model data points 15 in the model template 14 of interest. "and" is a logical operator. Other logical operators such as "or," "not," and "xor" may be used as well. Using a query, the user can specify a device data point 16 to be connected with.

In the event a link rule is set with respect to a data conversion template 31, a query for searching for tags assigned to device data points 16 and/or model templates 14 may be set in the point query 203.

"Link Direction 204," which is the direction of linking, is viewed from either the model template 14 end or the data conversion template 31 end. "In" means that: data is input from the device template 19 to the model template 14; data is input from the device template 19 to the data conversion template 31; and data is input from the data conversion template 31 to the model template 14. "Out" is the opposite of these.

"From Slot Name 205" is the name of the starting point.

"To Slot Name 206" is the name of the ending point.

### <Operation/Process>

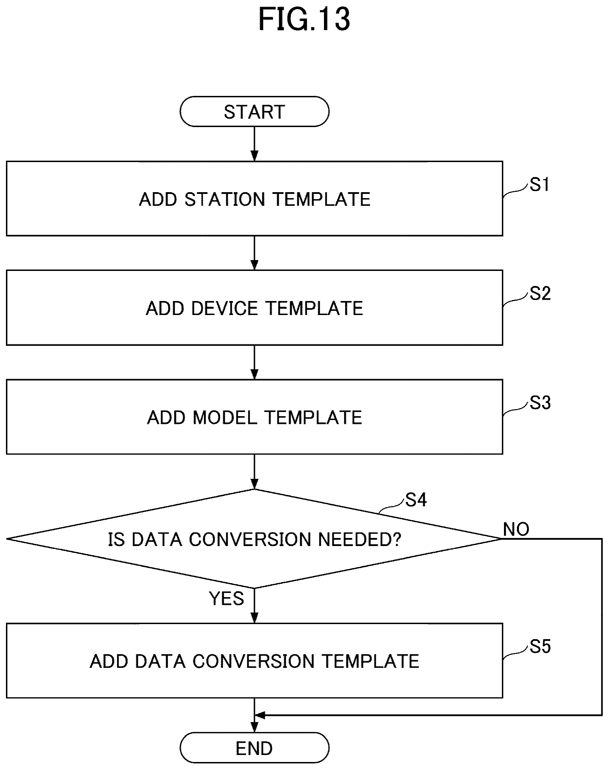

Referring to FIG. 13, a task that the person responsible for the setup performs for the auto link module 30 will be described. This task is a preparatory process that is performed before the auto link module 30 starts creating links. FIG. 13 is a flowchart showing examples of steps that the person responsible for the setup performs on the associated information creating device 60, on which the auto link module 30 operates.

The person performing the setup operates the associated information creating device 60 and adds a station template 17 (step S1). The station template 17 is an abstract representation of the building management system and provided in the form of software, so that device templates 19 and model templates 14 can be added thereto.

The person adds a device template 19 to the station template 17 (step S2). The person also adds a model template 14 to the station template 17 (step S3).

If it is necessary to change the data format of device data points 16 in the device template 19 to match that of the model template 14 ("Yes" in step S4), the person performing the setup adds a data conversion template 31 to the station template 17 (step S5).

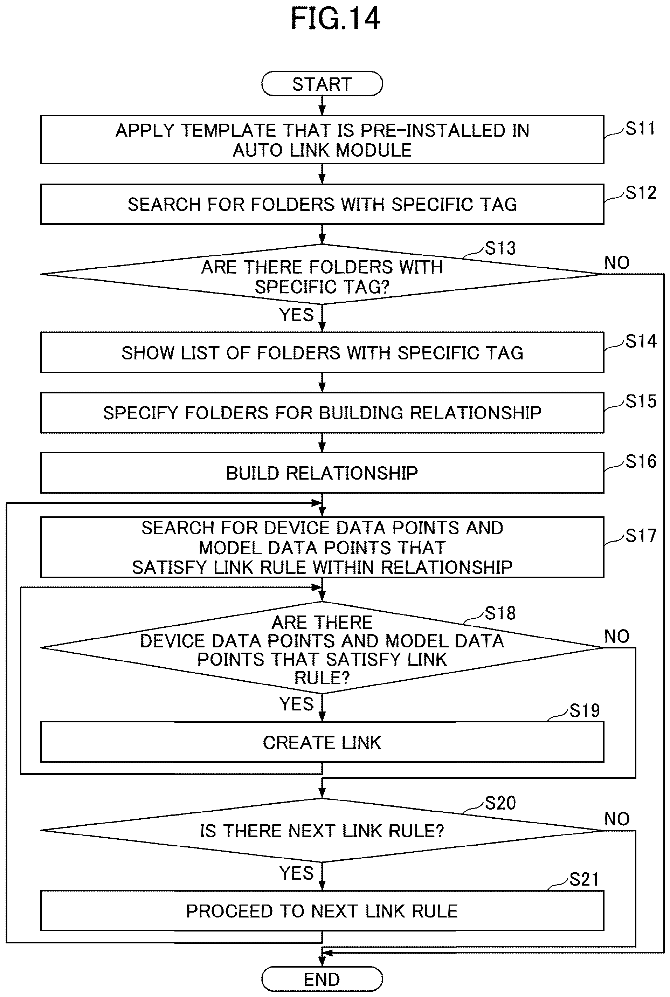

Next, referring to FIG. 14, the process of connecting device data points 16 and model data points 15 will be described. FIG. 14 is a flowchart for explaining the process in which the auto link module 30 connects model data points 15 in the model template 14 with device data points 16 in the device template 19. Although FIG. 14 illustrates a case in which model data points 15 in the model template 14 and device data points 16 in the device template 19 are connected, the following description may also apply to, for example, a case in which converting data points 34 in the data conversion template 31 and device data points 16 in the device template 19 are connected, and a case in which converting data points 34 and model data points 15 are connected.

First, the person performing the setup adds a template incorporating the auto link module 30 to the station template 17 (step S11). The auto link module 30 checks the link rules set in the model template 14 or in the data conversion template 31 one by one. The person may specify a type (i.e., model template 14) among the facilities and equipment 20 and control the auto link module 30 such that this type alone will be processed. Alternatively, the person may control the auto link module 30 to process different types of facilities and equipment 20 in order.

The search unit 61 of the auto link module 30 searches the device template 19 for folders 33 and 35 where the facility/equipment type specified by the person is set (step S12). Examples of "types" of the facilities and equipment 20 include "air conditioner," "lighting," and so forth. That is, this process of connecting data points is performed per facility or piece of equipment 20. The folders 33 and 35 are created per facility or piece of equipment 20. In these folders 33 and 35, for example, device data points 16 and model data points 15 are categorized by function, by characteristic, and so on. Subfolders of the folders 33 and 35 may include, for example, a folder for temperature, a folder for humidity, etc.

If folders 33 and 35 with the same facility or equipment type as that specified in step S12 are present in the model template 14 and the device template 19 ("Yes" in step S13), the display control unit 62 displays a list of folders 33 and 35 having the facility or equipment type specified in step S12 (step S14).

The person performing the setup specifies between which folders 33 on the model template 14 end and folders 35 on the device template 19 end relationships are to be built (step S15). The operation input unit 65 receives this specification as input.

The relationship setting unit 63 of the auto link module 30 builds relationships between the folders 33 and 35 specified by the person (step S16). A "relationship" used herein is a work area where a link may be created, regardless of whether or not actual exchange of data takes place.

Next, the search unit 61 acquires a link rule associated with the model template 14 containing the folders 33 where relationships with folders 35 are built (see FIG. 10A and FIG. 10B). The search unit 61 searches for device data points 16 and model data points 15 that satisfy the link rule, within the relationships built in step S16 (that is, in the folders 35 of the device template 19 and the folders 33 of the model template 14) (step S17). That is, the search unit 61 searches for device data points 16 and model data points 15 that have tags matching the query in the point query part of the link rule.

When, for example, a device data point 16 in the device template 19 and a model data point 15 in the model template 14 are found to match the search of step S17 ("Yes" in step S18), the link creating unit 64 creates a link between the model data point 15 and the device data point 16 (step S19).

If no device data points 16 or model data points 15 are found to match the search of step S17 ("No" in step S18), the search unit 61 checks whether there is a next link rule that is associated with the model template 14 containing the folders 33 where relationships with folders 35 are built (step S20).

If there is a next link rule, the process returns to step S17 (step S21). If there is no more link rule, the process of FIG. 14 ends.

The data conversion template 31 will be described in greater detail. If a data conversion template 31 is available, the auto link module 30 performs the same process as that of FIG. 14 twice, once for the device template 19 and once for the model template 14. According to the point query of a device data point link rule in the data conversion template 31, the search unit 61 scans the device data point tags of the converting data points 34 and searches for the tags of the device data points 16. According to the point query of a model data point link rule in the data conversion template 31, the search unit 61 scans the model data point tags of the converting data points 34 and searches for the tags of the model data point 15.

When the search yields matches, the link creating unit 64 connects, for example, a device data point 16 in the device template 19 having a tag that matches the point query in the link rule for device data points, with a converting data point 34 in the data conversion template 31. The link creating unit 64 also builds a connection between, for example, a model data point 15 in the model template 14 having a tag that matches the point query in the link rule for model data points, with a converting data point 34 in the data conversion template 31.

### <Associated Information created by Auto Link Module>

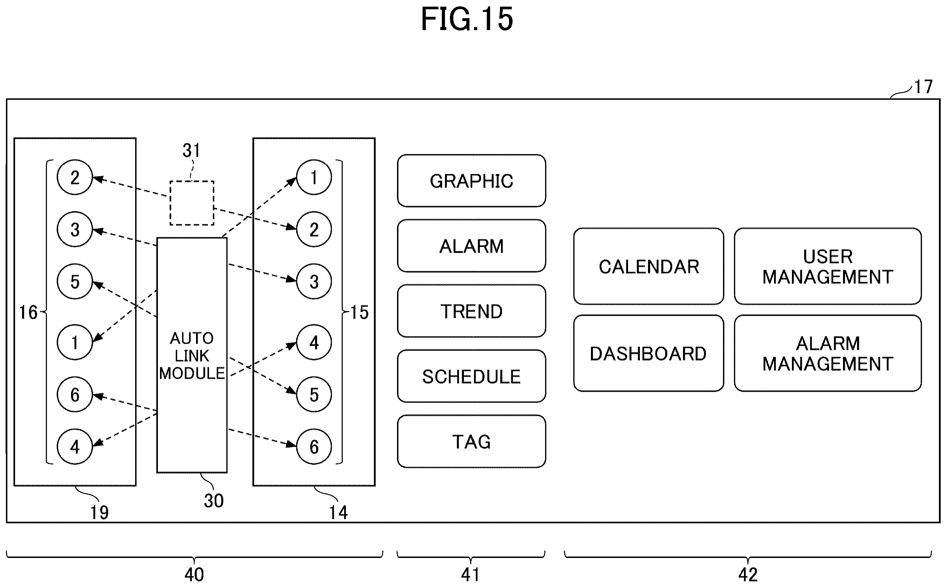

FIG. 15 is a diagram for schematically explaining how the auto link module 30 creates associated information. In FIG. 15, the layers move from left to right, representing layers closer to the user. The device template 19 illustrated here includes numbers 1 to 6 (that is, device data points 16). The model template 14 also includes numbers 1 to 6 (that is, model data points 15).

The auto link module 30 connects, for example, a model data point 15 and a device data point 16 that have the same number (each number being a "tag") based on the link rule. Also, if there are a device data point 16 and a model data point 15 that require data conversion, these model data point 15 and device data point 16 are connected via a data conversion template 31. The dotted lines connecting the numbers in FIG. 15 are links created by the link creating unit 64. One or more links constitute associated information 40.

By building connections between data points thus, when, for example, the data stored at a given device data point 16 is changed, the building management system 100 changes the data stored at the corresponding model data point 15 likewise. Furthermore, when the data stored at a given model data point 15 is changed, the building management system 100 changes the data stored at the corresponding device data point 16 likewise, and sends a data change request to the corresponding facility/equipment 20.

The program module unit 41 is a group of software that imparts functions to the building management system 100. For example, the program module unit 41 creates display contents, issues alarms, creates graphs, manages schedules, manages tag information, and so on.

The user interface unit 42 has a function to create the contents to be displayed on the display. The contents that the user interface unit 42 displays include, for example, a calendar, a user management screen, a dashboard screen (showing various data including graphs, tables, etc.), and an alarm management screen.

### <Data Format Conversion>

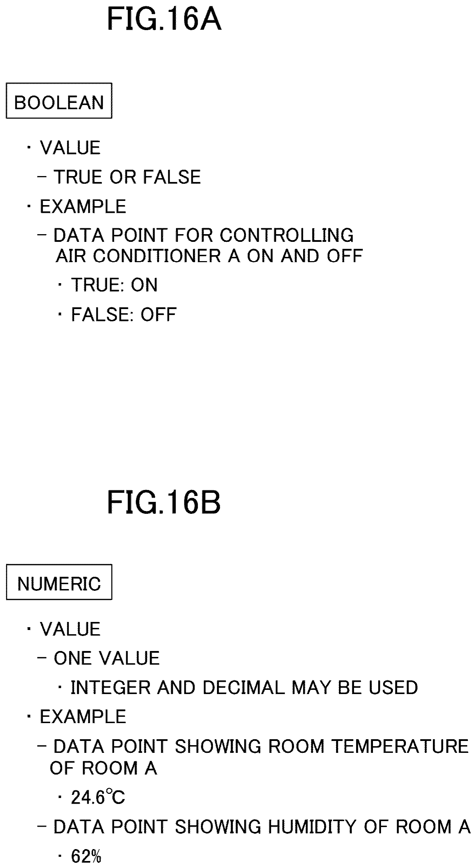

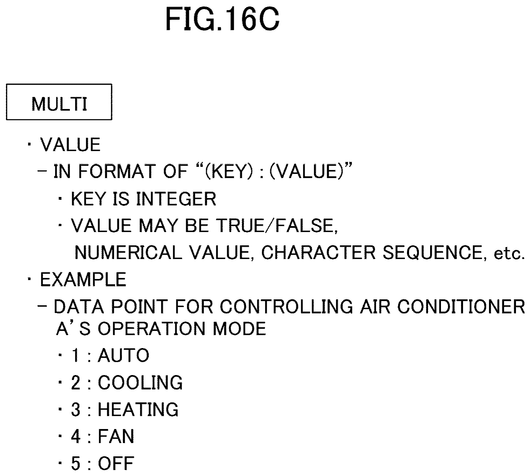

How the data conversion template 31 relays data and converts data formats will be described with reference to FIG. 16 to FIG. 20. In the data conversion template 31, data points 34 that are subject to or targeted for conversion are set. The data format of these converting data points 34 is changed. Data from device data points 16 is relayed to model data points 15, or, conversely, data from model data points 15 is relayed to device data points 16.

FIG. 16A to FIG. 16C are diagrams illustrating data formats. As shown in FIG. 16A to FIG. 16C, the following three data formats are available:
(i) Boolean
(ii) Numeric
(iii) Multi

"Boolean" is a data format in which data may take two values such as "True" and "False." For example, a model data point 15 for controlling an air conditioner to be turned ON and OFF may take the Boolean values of "True" (meaning that the air conditioner is turned "ON") and "False" (meaning that the air conditioner is turned "OFF").

"Numeric" refers to a data format in which data takes a single numerical value. The value may be either an integer or a decimal. For example, in the event the "numeric" format is used, a model data point for showing room temperature may have a value such as "24.6 °C." Similarly, a data point for showing room humidity may have a value such as "62%."

"Multi" refers to a data format in which data has values in the form of "key: value". The "key" part may be an integer, and the "value" part may be a Boolean value (true/false), a number, a character sequence, etc. For example, assuming that a data point 15 is one for controlling an air conditioner's operation mode, the "multi" values that the data point 15 can take include "1: AUTO," "2: COOLING," "3: HEATING," "4: FAN," "5: OFF," etc.

Among these "Boolean," "numeric," and "multi" data formats, the data conversion template 31 can convert one data format to another one, and vice versa.

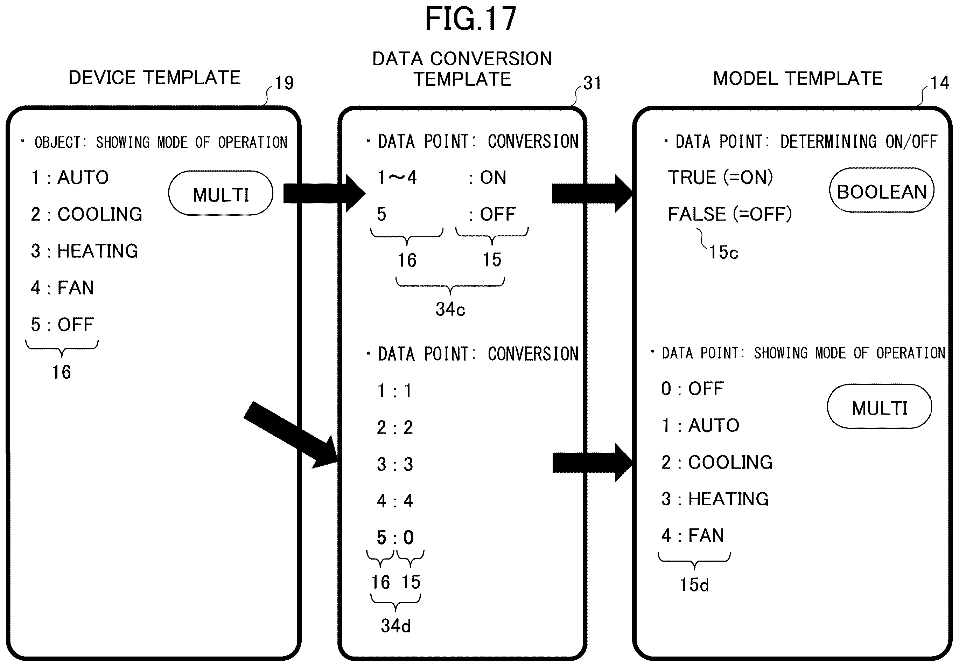

FIG. 17 shows examples of data format conversion, namely multi-to-Boolean conversion and multi-to-multi conversion. In the examples shown in FIG. 17, although the device template 19 does not contain a device data point 16 that indicates an air conditioner's ON/OFF status, the air conditioner's ON/OFF status is displayed on the model template 14 end, and the "multi" data of a device data point 16 is converted to "Boolean" data and to "multi" data of model data points 15.

The device data point 16 in the device template 19 shows the operation mode of the air conditioner. The device data point 16 has the "multi" data format, and its values include: "1: AUTO," "2: COOLING," "3: HEATING," "4: FAN," and "5: OFF."

Meanwhile, the person performing the setup wants to show, in the model template 14, whether the air conditioner is turned ON or OFF. Although the model template 14 also employs the "multi" data format, the "key: value" pairs are not the same as those of the device template 19.

The data conversion template 31 therefore converts data as follows: First, the data conversion template 31 converts the "multi" values of the device data point 16, namely, "1: AUTO," "2: COOLING," "3: HEATING," and "4: FAN," into the Boolean value "ON" (note that the "Boolean" format is an example of a first data format). Likewise, the data conversion template 31 converts the "multi" value "5: OFF" into the Boolean value "OFF." In the model template 14, "ON" corresponds to "True" and "OFF" corresponds to "False." Furthermore, the data conversion template 31 changes the correspondence between "multi" keys and values in the device template 19 and the correspondence between "multi" keys and values in the model template 14 (note that the "multi" format is an example of a second data format). In this example, the data conversion template 31 does not change the keys 1 to 4, but replaces the key 5 in the device template 19 with the key 0 in the model template 14. In the model template 14, "1" corresponds to "AUTO," "2" corresponds to "COOLING," "3" corresponds to "HEATING, " "4" corresponds to "FAN," and "0" corresponds to "OFF."

Even when the device data point 16 in the device template 19 does not support the "Boolean" format, the above-described conversion and change allow the model template 14 to show whether the air conditioner is ON or OFF. Furthermore, even if the correspondence between keys and values is different between the device template 19 and the model template 14, the model template 14 can still show the air conditioner's operation mode in the "multi" format.

In doing so, the link creating unit 64 connects the "multi" device data point 16 in the device template 19 with the data point 34c for Boolean-to-multi conversion in the data conversion template 31. The data conversion template 31 converts the device data point 16 in the device template 19, which corresponds to either the keys 1 to 4 or the key 5, into the value "True" or "False" in the model template 14.

Furthermore, the link creating unit 64 connects the "multi" device data point 16 in the device template 19 with the data point 34d for multi-to-multi conversion in the data conversion template 31. The data conversion template 31 does not change the keys 1 to 4, but replaces the key 5 in the device template 19 with the key 0 in the data conversion plate 31.

Furthermore, the link creating unit 64 connects the data point 34c for Boolean-to-multi conversion in the data conversion template 31, with the "Boolean" model data point 15c in the model template 14, and connects the data point 34d for multi-to-multi conversion in the data conversion template 31, with the "multi" model data points 15d in the model template 14.

As a result of the foregoing, the "multi" data stored at the device data point 16 in the device template 19 is converted to "Boolean" data and "multi" data in the data conversion template 31, and sent to the "Boolean" model data point 15 and to the "multi" model data point 15 in the model template 14.

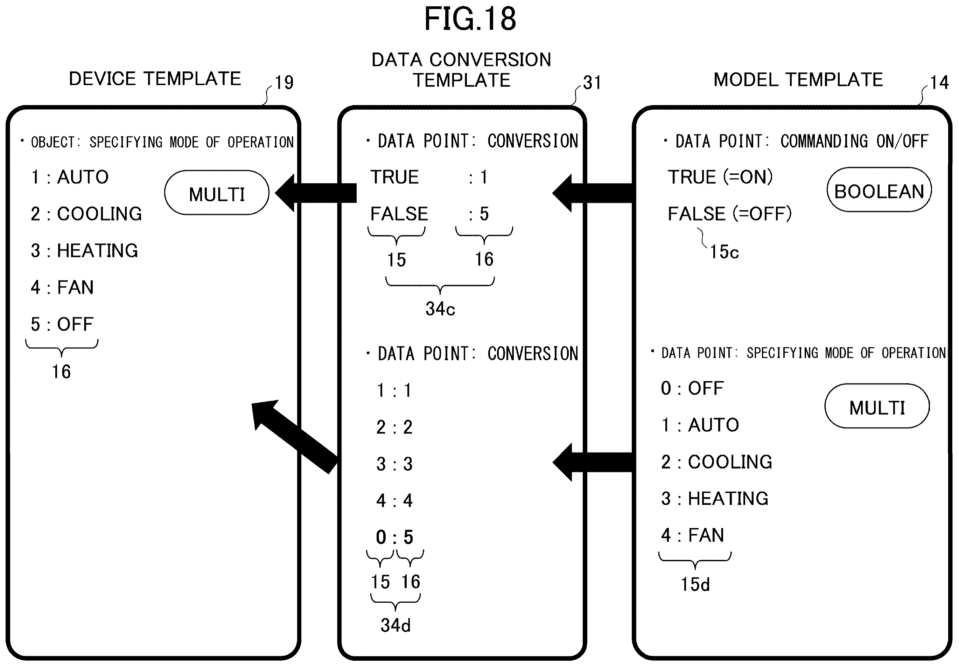

FIG. 18 is a diagram showing examples of data format conversion performed when the model template 14 uses a data format that is not found in the device template 19 (as shown in FIG. 17). FIG. 18 explains the data flow seen from the model template 14 end. Referring to FIG. 18, the device data point 16 in the device template 19 provides no ON/OFF command for an air conditioner, which is available in the model template 14. Therefore, a data conversion template 31 for providing ON/OFF commands for the air conditioner is needed. Furthermore, the correspondence between "multi" keys and values in the model template 14 is different from that of the device template 19. Therefore, a data conversion template 31 for changing the operation mode indicated in the model template 14 to the operation mode shown in the device template 19 is needed.

Therefore, as shown in FIG. 18, the data conversion template 31 changes "True" in the model template 14 to a "multi" key of "1" and changes "False" in the model template 14 to a "multi" key of "5." Furthermore, the data conversion template 31 changes the correspondence between "multi" keys and values in the model template 14 and the correspondence between "multi" keys and values in the device template 19. That is, the data conversion template 31 does not change the keys 1 to 4, but replaces the key 0 in the model data template 14 with the key 5 in the data conversion template 31.

By means of these changes, even if the device data point 16 in the device template 19 does not support the "Boolean" format, the model template 14 can indicate the ON/OFF status of the air conditioner to the device template 19. Also, even if the correspondence between keys and values is different between the device template 19 and the model template 14, the model template 14 can indicate the operation mode of the air conditioner in the "multi" format in the device template 19.

The link creating unit 64 connects the "Boolean" model data point 15c in the model template 14 with the converting data point 34c for Boolean-to-multi conversion in the data conversion template 31, and connects the "multi" model data point 15d in the model template 14 with the data point 34d for multi-to-multi conversion in the data conversion template 31.

Similarly, the link creating unit 64 connects the data point 34c for Boolean-to-multi conversion in the data conversion template 31 with the "multi" device data point 16 in the device data template 19. Furthermore, the link creating unit 64 connects the data point 34d for multi-to-multi conversion in the data conversion template 31 with the "multi" device data point 16 in the device template 19.

In the example illustrated in FIG. 18, the Boolean data stored at the model data point 15c in the model template 14 is converted to a "multi" key value in the data conversion template 31 (such that "1" is "True" and "5" is "False"), and the result is sent to the device data point 16 in the device template 19. The "multi" data stored at the model data point 15d in the model template 14, or the correspondence of keys and values thereat, is converted through the data conversion template 31 (that is, 0 is changed to 5), and the result is sent to the device data point 16 in the device template 19.

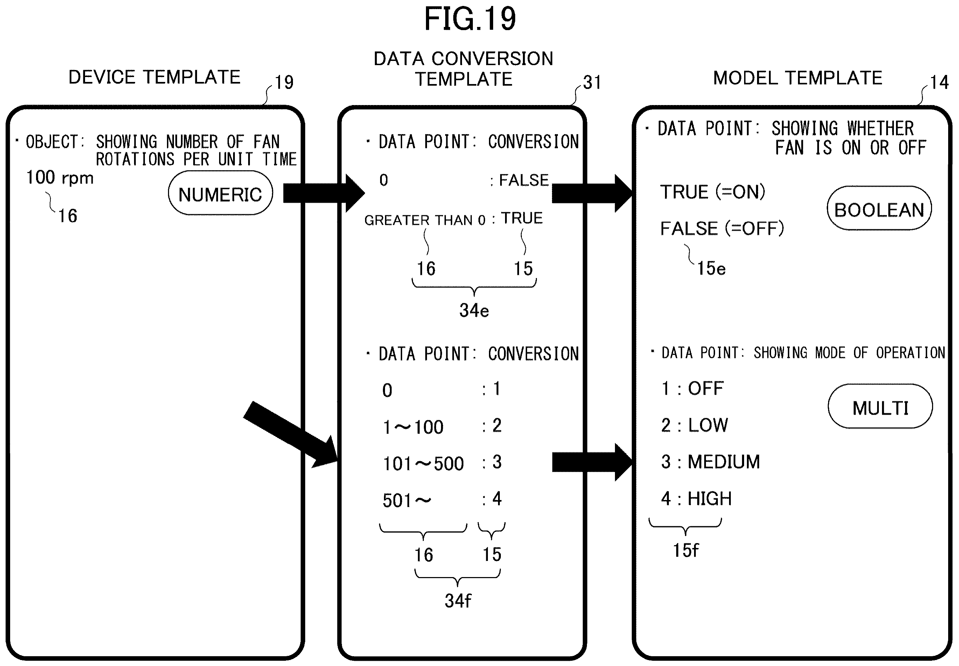

FIG. 19 shows examples of data format conversion, namely numeric-to-Boolean conversion and numeric-to-multi conversion. In FIG. 19, a case is illustrated in which the device data point 16 in the device template 19 shows the number of fan rotations per unit time, and in which the fan's ON/OFF status and operation mode are shown in the model template 14.

The device data point 16 in the device template 19 displays the number of fan rotations per unit time. The device data point 16 has the "numeric" data format, and the model template 14 is designed to indicate the fan's ON/OFF status. Also, the model template 14 is designed to display the fan's operation mode (namely, "1: OFF," "2: LOW," "3: MEDIUM," and "4: HIGH.").

The data conversion template 31 therefore converts data as follows: First, the data conversion template 31 changes the "numeric" value of the device data point 16 to "False" if the value is 0, and to "True" if the value is greater than 0. In the model template 14, "ON" corresponds to "True" and "OFF" corresponds to "False." Also, depending on the "numeric" value the device data point 16 indicates, the data conversion template 31 changes this value to a "multi" key (one of 1 to 4). That is, the data conversion template 31 converts the number of fan rotations per unit time given in the "numeric" format to: key=1 if the number is 0; key=2 if the number is between 1 and 100, inclusive; key=3 if the number is between 101 and 500, inclusive, and key=4 if the number is greater than 500. In the model template 14, "1" corresponds to "OFF," "2" corresponds to "LOW," "3" corresponds to "MEDIUM," and "4" corresponds to "HIGH." These values and numbers are simply examples.

Even when the device data point 16 in the device template 19 does not support the "Boolean" format, the above-described changes allow the model template 14 to show the fan's ON/OFF status, which is determined by converting the number of fan rotations per unit time in the device template 19. Also, even if the device template 19 does not support the "multi" format, the model template 14 can show the fan's operation mode in the "multi" format.

The link creating unit 64 connects the "numeric" device data point 16 in the device template 19 with a converting data point 34e for numeric-to-Boolean conversion in the data conversion template 31, and connects the "numeric" device data point 16 in the device template 19 with a data point 34f for numeric-to-multi conversion in the data conversion template 31. Also, the link creating unit 64 connects the data point 34e for numeric-to-Boolean conversion in the data conversion template 31 with a "Boolean" model data point 15e in the model template 14, and connects the data point 34f for numeric-to-multi conversion in the data conversion template 31 with a "multi" model data point 15f in the model template 14.

As a result of the foregoing, the "numeric" data stored at the device data point 16 in the device template 19 is converted into "Boolean" data and "multi" data through the data conversion template 31, and the result is sent to the "Boolean" model data points 15e and the "multi" model data point 15f in the model template 14.

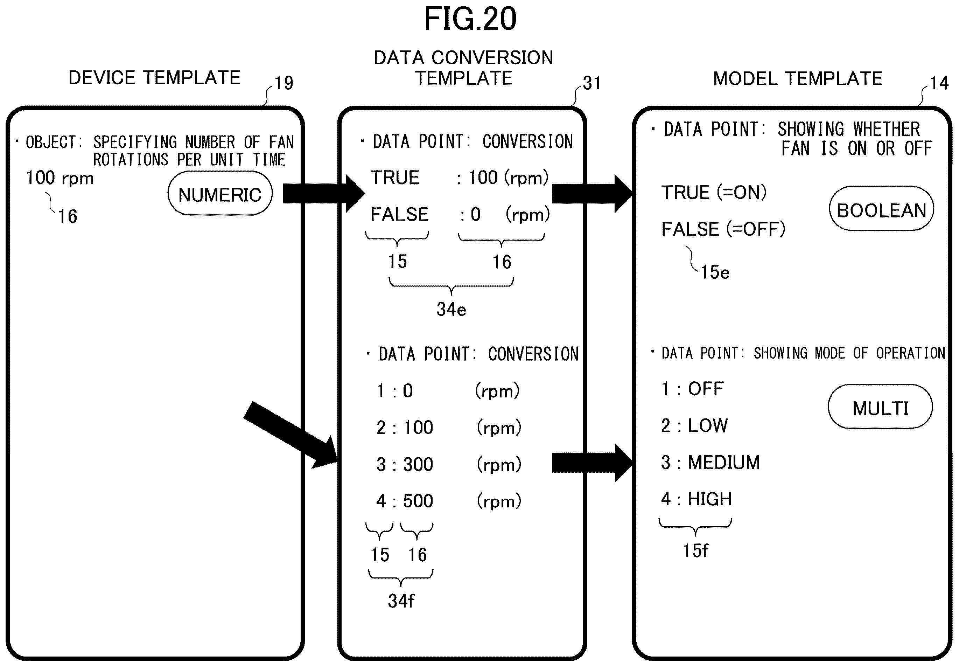

Based partly on FIG. 19, FIG. 20 shows examples of data format conversion performed when the number of fan rotations per unit time and the fan's operation mode adopt different data formats between the model template 14 and the device template 19. FIG. 20 explains the data flow seen from the model template 14. Referring to FIG. 20, the model data point that commands the fan to turn ON and OFF in the model template 14 does not match the device data point 16 in the device template 19. Therefore, a data conversion template 31 for commanding the fan to turn ON and OFF is needed. Likewise, the model data point that shows the fan's operation mode in the model template 14 does not match the device data point 16 in the device template 19. Therefore, a data conversion template 31 for showing the fan's operation mode is needed.

Therefore, in FIG. 20, the data conversion template 31 changes "True" in the model template 14 to a "numeric" value of 100 rpm, and changes "False" in the model template 14 to a "numeric" value of 0 rpm. Furthermore, the data conversion template 31: changes "1" in the "multi" pair "1: OFF" in the model template 14 to a "numeric" value of 0; changes "2" in the "multi" pair "2: LOW" in the model template 14 to a "numeric" value of 100; changes "3" in the "multi" pair "3: MEDIUM" in the model template 14 to a "numeric" value of 300; and changes "4" in the "multi" pair "4: HIGH" in the model template 14 to a "numeric" value of 500.

Even if the device data point 16 in the device template 19 does not support the "Boolean" format, the above-described changes allow the model template 14 to give an indication of the fan's ON/OFF status to the device template 19. Furthermore, even if the device template 19 does not support the "multi" format, the model template 14 can indicate the fan's operation mode to the device template 19 in the "multi" format.

The link creating unit 64 connects the "Boolean" model data points 15e in the model template 14 with the converting data point 34e for Boolean-to-numeric conversion in the data conversion template 31, and connects the "multi" model data points 15f in the model template 14 with the data point 34f for multi-to-numeric conversion in the data conversion template 31. Furthermore, the link creating unit 64 connects the converting data point 34e for Boolean-to-numeric conversion in the data conversion template 31 with the "numeric" device data point 16 in the device template 19, and connects the data point 34f for multi-to-numeric conversion in the data conversion template 31 with the "numeric" device data point 16 in the device template 19.

In the example illustrated in FIG. 20, the "Boolean" data stored at the model data point 15e in the model template 14 is converted to a "numeric" value that represents the number of fan rotations per unit time through the data conversion template 31, and the result is sent to the device data point 16 in the device template 19. Similarly, the "multi" data stored at the model data point 15f in the model template 14 is converted to the number of fan rotations per unit time in the data conversion template 31, and the result is sent to the device data point 16 in the device template 19. Therefore, even if no device data point 16 in the device template 19 commands the fan to turn ON and OFF unlike in the model template 14, the user can still command the fan to turn ON and OFF in the device template 19. Similarly, even when no device data point 16 in the device template 19 indicates the fan's operation mode unlike in the model template 14, the user can still specify the fan's operation mode in the device template 19.

In FIG. 17 to FIG. 20, each data conversion template 31 changes one data format to two data formats, but it is equally possible to convert one data format to three or more data formats. Furthermore, the data conversion template 31 may also convert one data format in the model template 14 to two or more data formats in the device template 19.

### <Advantages>

Compared to cases in which device data points 16 and model data points 15 are connected manually, the information processing method described herein can reduce the workers' human errors, minimize the labor required for on-site connection testing, and so forth. Furthermore, by reducing the labor required to build the building management system 100, overall expenditures can be saved.

### <Other Applicable Examples>

Although an optimal example for carrying out the present disclosure has been described above based on an embodiment, the present disclosure is by no means limited to the embodiment or examples described herein, and a variety of changes, substitutions, and so forth can be made to the herein-contained technical specifics without departing from the spirit of the present disclosure.

For example, although a building management system 100 according to the present disclosure has been described above, the building management system 100 is suitable for use in any case in which one data point is connected with another data point or other data points inside software.

The process of automatically associating device data points 16 with model data points 15 may take place in the building management device 10 instead of in the associated information creating device 60.

Although the present disclosure has been described such that the model template 14 or the data conversion template 31 provides link rules, the link rules may be associated with model data points 15 or converting data points 34.

For example, the example architecture shown in FIG. 8 is divided into major functional units to help clarify the series of steps that are performed in the associated information creating device 60. The division, grouping, or naming of these processing units in no way limit the present disclosure. Depending on the specifics of processing, for example, the associated information creating device 60 may be divided into a larger number of processing units/parts. Furthermore, the associated information creating device 60 may be configured such that more processing is performed in every single processing unit/part.

Furthermore, the group of devices described in the above embodiment simply illustrates one of many various computing environments that can implement the embodiment disclosed herein. According to one embodiment, for example, the associated information creating device 60 may include multiple computing devices, such as server clusters. These computing devices are structured to communicate with each other via any type of communication link, including a network or a shared memory, for example, to perform the processes disclosed herein.

The functions described in the present disclosure do not necessarily have to be implemented in the form of software processes that are executed by running programs, and may be implemented using one or more processing circuits. Here, the term "processing circuit" as used herein may refer to a variety of devices, including: a processor programmed to carry out various functions by software, such as a processor implemented by electronic circuitry, an application-specific integrated circuit (ASIC), a digital signal processor (DSP), a field-programmable gate array (FPGA), etc. that are designed to perform the functions described herein, existing circuit modules, and so forth.

### <Reasons for the Achieved Effects>

A first example of the present disclosure provides a method for use by a building management device for managing facilities and equipment installed on property, in which "a control unit associates the model data points and the device data points with each other based on respective pieces of identification information assigned to the model data points and the device data points," where data for use in an application for monitoring and controlling the facilities and equipment is stored at the model data points and data that is input from or output to the facilities and equipment is stored at the device data points. According to the first example of the present disclosure, the task of associating model data points and device data points with each other, which has heretofore been performed manually, can be carried out automatically, so that the work load for building connections between model data points and device data points can be reduced. The ID information according to the first example is, for example, characters, numbers, values, symbols, alphabetic letters, or combinations of these, that can uniquely identify or specify each model data point or device data point. The ID information is referred to as "tags" herein.

In a second example of the present disclosure, "the model data points are generated based on a model template that is provided for each type among the facilities and equipment," so that the model data points 15 in the model template 14 are grouped by type, that is, by product category, making it not necessary to create model templates 14 in numerous patterns, and thus saving time and efforts. Furthermore, "the model data points for use in monitoring and controlling the facilities and equipment are defined, with respective pieces of identification information assigned to the model data points, in the model template," thus allowing for monitoring and control of the facilities and equipment using model data points.

In a third example of the present disclosure, "the building management device stores a link rule that defines respective pieces of identification information assigned to one of the model data points and one of the device data points that are to be associated with each other," and "the control unit identifies and associates the one of the model data points and the one of the device data points with each other based on the link rule," so that the user can set the link rules appropriately, ensuring proper control of connections between model data points and device data points.

In a fourth example of the present disclosure, "the device data points are generated based on a device template that is provided for each model among the facilities and equipment," and "in the device template, all the device data points that the facilities and equipment provide are defined, with respective pieces of identification information assigned to the device data points," so that model data points 15 and device data points 16 are connected with each other based on link rules provided in the model template 14, and the process of building connections may be performed less frequently.

In a fifth example of the present disclosure, "when data stored at one of the device data points changes, the control unit changes corresponding data stored among the model data points," and, "when data stored at one of the model data points changes, the control unit changes corresponding data stored among the device data points and sends a data change request to the facilities and equipment," so that the building management device 10 can display data that arrives from device data points 16, allowing the user to check the data. When the user makes a change to data, this data can be sent to the building management device 10.

In a sixth example of the present disclosure, the model data points 15 are generated based on a model template that is provided for each type among the facilities and equipment 20, the device data points 16 are generated based on a device template that is provided for each model among the facilities and equipment 20, and, "the control unit associates the model data points in the model template with the device data points in the device template, based on the respective pieces of identification information assigned to the model data points and the device data points," so that data points that correspond to the same type or model among the facilities and equipment 20 can be connected.

In a seventh example of the present disclosure, "the control unit associates the converting data points with corresponding device data points based on respective pieces of identification information assigned to the converting data points and the corresponding device data points, and associates the converting data points with corresponding model data points based on respective pieces of identification information assigned to the converting data points and the corresponding model data points," so that, for example, the data format of a device data point 16 can be converted to the data format of a model data point 15, and the data format of a model data point 15 can be converted to the data format of a device data point 16.

In an eighth example of the present disclosure, "the data conversion template converts a data format of data output from the device data points associated with the converting data points, to a first data format and a second data format, the model data points associated with the converting data points supporting the first data format and the second data format, or converts the first data format and the second data format that the model data points associated with the converting data points support, to a data format of data input to the device data points associated with the converting data points," so that, even when model data points 15 hold data in two different data formats, one data format of a device data point 16 can be converted to the data formats of model data points 15.

In a ninth example of the present disclosure, the data conversion template
converts a data format that includes a plurality of pairs of keys and values and that the device data points 16 support, to a binary data format and a data format including a plurality of pairs of keys and values, both data formats being supported by the model data points 15, or converts the binary data format and the data format including the plurality of pairs of keys and values, both data formats being supported by the model data points 15, to the data format that includes a plurality of pairs of keys and values and that the device data points 16 support.

In a tenth example of the present disclosure, the data conversion template converts a numeric data format supported by device data points 16, to a binary data format and a data format including a plurality of pairs of keys and values, both data formats being supported by model data points 15, or converts the binary data format and the data format including the plurality of pairs of keys and values, both data formats being supported by model data points 15, into the numeric data format supported by device data points 16.

The present application is based upon and claims priority to Japanese patent application No. 2023-059591, filed with Japan Patent Office on March 31, 2023, the entire contents of which are incorporated herein by reference.

### Reference Signs List

- 14: Model template
- 15: Data point
- 16: Device data point
- 19: Device template
- 20: Facility/equipment
- 60: Associated information creating device
- 100: Building management system

## Claims

1. A method for use by a building management device for managing facilities and equipment installed on property, the method comprising:
associating model data points, at which data for use in an application for monitoring and controlling the facilities and equipment is stored, with device data points, at which data that is input from or output to the facilities and equipment is stored,
wherein a control unit associates the model data points and the device data points with each other based on respective pieces of identification information assigned to the model data points and the device data points.

2. The method according to claim 1,
wherein the model data points are generated based on a model template that is provided for each type among the facilities and equipment, and
wherein the model data points for use in monitoring and controlling the facilities and equipment are defined, with respective pieces of identification information assigned to the model data points, in the model template.

3. The method according to claim 1 or 2,
wherein the building management device stores a link rule that defines respective pieces of identification information assigned to one of the model data points and one of the device data points that are to be associated with each other, and
wherein the control unit identifies and associates the one of the model data points and the one of the device data points with each other based on the link rule.

4. The method according to claim 1,
wherein the device data points are generated based on a device template that is provided for each model among the facilities and equipment, and
wherein, in the device template, all the device data points that the facilities and equipment provide are defined, with respective pieces of identification information assigned to the device data points.

5. The method according to claim 1,
wherein, when data stored at one of the device data points changes, the control unit changes corresponding data stored among the model data points, and
wherein, when data stored at one of the model data points changes, the control unit changes corresponding data stored among the device data points and sends a data change request to the facilities and equipment.

6. The method according to claim 1,
wherein the model data points are generated based on a model template that is provided for each type among the facilities and equipment,
wherein, in the model template, the model data points for use in monitoring and controlling the facilities and equipment are defined, with respective pieces of identification information assigned to the model data points,
wherein the device data points are generated based on a device template that is provided for each model among the facilities and equipment,
wherein, in the device template, all the device data points that the facilities and equipment provide are defined, with respective pieces of identification information assigned to the device data points, and
wherein the control unit associates the model data points in the model template with the device data points in the device template, based on the respective pieces of identification information assigned to the model data points and the device data points.

7. The method according to claim 1,
wherein converting data points, where data of the device data points is relayed to the model data points or data of the model data points is relayed to the device data points, are set in a data conversion template for converting a data format of the device data points to a data format of the model data points or for converting the data format of the model data points to the data format of the device data points, and
wherein the control unit:
associates the converting data points with corresponding device data points based on respective pieces of identification information assigned to the converting data points and the corresponding device data points; and
associates the converting data points with corresponding model data points based on respective pieces of identification information assigned to the converting data points and the corresponding model data points.

8. The method according to claim 7, wherein the data conversion template:
converts a data format of data output from the device data points associated with the converting data points, to a first data format and a second data format, the model data points associated with the converting data points supporting the first data format and the second data format; or
converts the first data format and the second data format that the model data points associated with the converting data points support, to a data format of data input to the device data points associated with the converting data points.

9. The method according to claim 7, wherein the data conversion template:
converts a data format including a plurality of pairs of keys and values and output from the device data points associated with the converting data points, to a binary data format and a data format including a plurality of pairs of keys and values, both data formats being supported by the model data points associated with the converting data points; or
converts the binary data format and the data format including the plurality of pairs of keys and values, both data formats being supported by the model data points associated with the converting data points, to a data format including a plurality of pairs of keys and values and input to the device data points associated with the converting data points.

10. The method according to claim 7, wherein the data conversion template:
converts a numeric data format output from the device data points associated with the converting data points, to a binary data format and a data format including a plurality of pairs of keys and values, both data formats being supported by the model data points associated with the converting data points; or
converts the binary data format and the data format including the plurality of pairs of keys and values, both data formats being supported by the model data points associated with the converting data points, to a numeric data format input to the device data points associated with the converting data points.

11. A building management device for managing facilities and equipment installed on property, the building management device comprising:
a control unit configured to associate model data points and device data points with each other based on respective pieces of identification information assigned to the model data points and the device data points, data for use in an application for monitoring and controlling the facilities and equipment being stored at the model data points, and data that is input from or output to the facilities equipment being stored at the device data points.

12. A program for causing a building management device for managing facilities and equipment installed on property to function as:
a control unit configured to associate model data points and device data points with each other based on respective pieces of identification information assigned to the model data points and the device data points, data for use in an application for monitoring and controlling the facilities and equipment being stored at the model data points, and data that is input from or output to the facilities equipment being stored at the device data points.
